(19) Europäisches Patentamt
European Patent Office
Office européen des brevets

(11) **EP 1 170 678 B1**

(12) **EUROPÄISCHE PATENTSCHRIFT**

(45) Veröffentlichungstag und Bekanntmachung des Hinweises auf die Patenterteilung:
**15.05.2013  Patentblatt 2013/20**

(51) Int Cl.:
***G06F 17/30*** *(2006.01)*

(21) Anmeldenummer: **01114261.9**

(22) Anmeldetag: **12.06.2001**

(54) **Verfahren und Vorrichtung zur automatischen Suche relevanter Bilddatensätze**

Method and apparatus for automatically searching for relevant sets of images

Méthode et appareil de recouvrement automatique d'ensembles pertinents d'images

(84) Benannte Vertragsstaaten:
**AT BE CH CY DE DK ES FI FR GB GR IE IT LI LU MC NL PT SE TR**

(30) Priorität: **03.07.2000  DE 10032225**

(43) Veröffentlichungstag der Anmeldung:
**09.01.2002  Patentblatt 2002/02**

(73) Patentinhaber: **Prof. Dr.-Ing. Horst, Zuse**
**10719 Berlin (DE)**

(72) Erfinder: **Zuse, Horst, Prof. Dr.-Ing.**
**10719 Berlin (DE)**

(74) Vertreter: **Liesegang, Eva**
**Boehmert & Boehmert**
**Pettenkoferstrasse 20-22**
**80336 München (DE)**

(56) Entgegenhaltungen:
EP-A- 0 802 489     US-A- 5 504 884
US-A- 5 642 431     US-A- 5 793 888
US-A- 5 999 664

• LAAKSONEN J ET AL: "PicSOM: self-organizing maps for content-based image retrieval" NEURAL NETWORKS, 1999. IJCNN '99. INTERNATIONAL JOINT CONFERENCE ON WASHINGTON, DC, USA 10-16 JULY 1999, PISCATAWAY, NJ, USA,IEEE, US, Bd. 4, 10. Juli 1999 (1999-07-10), Seiten 2470-2473, XP010373164 ISBN: 0-7803-5529-6
• BIANCHI BERTHOUZE N ET AL: "An interactive visual environment to understand, model and exploit user subjectivity in image retrieving systems" IMAGE ANALYSIS AND PROCESSING, 1999. PROCEEDINGS. INTERNATIONAL CONFERENCE ON VENICE, ITALY 27-29 SEPT. 1999, LOS ALAMITOS, CA, USA,IEEE COMPUT. SOC, US, 27. September 1999 (1999-09-27), Seiten 981-986, XP010354328 ISBN: 0-7695-0040-4

**Beschreibung**

Die Erfindung liegt auf dem Gebiet der Suche bzw. des Abrufs von Information, inbesondere von elektronisch gespeicherten Bildern in elektronischen Datenbanken.

Im Zusammenhang mit dem Internet, welches in kürzester Zeit immer größere Informationsmengen zur Verfügung stellt, besteht ein wachsender Bedarf für Möglichkeiten zur gezielten und effektiven Suche nach Informationen, die in Datenbanken elektronisch gespeichert sind. Die Problemstellung in Verbindung mit der Suche bzw. dem Abruf von elektronisch gespeicherten Informationen in Datenbanken, welche als sogenanntes "Information Retrieval" bezeichnet wird, kann wie folgt formuliert werden: Gegeben ist eine Datenbank mit n Datensätzen $x_1, ..., x_n$ ($n \geq 2$). Die Bildsuche bzw. der Abruf von Bildern ist ein spezielles Verfahren der Suche in Datenbanken. Bei der Bildsuche handelt es sich bei den Datensätzen $x_1, ..., x_n$ um n in elektronischer Form vorliegende Bilder. Gesucht ist ein Teilmenge $D_{rel}$ von relevanten Datensätzen (elektronischen Bildern) aus der Datenbank. Die Teilmenge $D_{rel}$ stellt die für eine bestimmte Fragestellung eines Benutzers relevante Menge von Datensätzen dar. Im Fall der Bildsuche sind dies beispielsweise Strandbilder von der Küste Hawai's.

Bei bekannten Verfahren und Vorrichtungen zur Bildsuche in Datenbanken wird versucht, die relevante Teilmenge $D_{rel}$ zunächst mit Hilfe von Schlagwörtern zu beschreiben, und anschlie-βend eine Suchanfrage mit Hilfe der Schlagwörter ausgeführt. Der Datenbankbenutzer stellt hierbei - meist ohne Kenntnis der gesamten in der Datenbank benutzten Schlagwortliste - eine textuelle Anfrage; im oben genannten Beispiel könnte die Anfrage die Worte "Strand Hawaii" umfassen. Die textuelle Anfrage wird dann mit Schlagwörtern verglichen, die für die von der Datenbank umfaßten Bilder jeweils gespeichert sind. Hierbei wird häufig das sogenannte Boolsche Suchverfahren angewendet. Bei diesem Verfahren hat der Benutzer die Möglichkeit, die Schlagworte mit AND, OR und NOT zu verbinden. In manchen Verfahren bzw. Vorrichtungen ist es darüber hinaus möglich, diese drei Operationen jeweils mit einer Wichtung zu versehen.

Im Zusammenhang mit der Suche in einer Bilddatenbank treten die folgenden Probleme auf:

1. Wie kann die gesuchten Teilmenge $D_{rel}$ für die Suche mit Hilfe von Worten systematisch beschrieben werden, wenn die Datensätze $x_i$ (digitalisierte) Bilder sind ?
2. Die Datenbank umfassen oft eine sehr große Anzahl von Bildern (n >> 100.000), so daß der Benutzer sich nicht alle n Bilder anschauen und beurteilen kann.

Beim Beschreiben von Bildern für die Suche kann grundsätzlich zwischen zwei unterschiedlichen Ansätzen unterschieden werden. In einem Fall wird das Bild digitalisiert, und es werden Merkmale aus dem digitalen Bild extrahiert. Dieses beginnt bei der einfachsten Beschreibung mit Hilfe von Grau- oder von Farbwerten jedes Pixels (sogenannten "low-level features"), d.h. bei einem Bild mit 1.000 x 1.000 Pixeln werden 1.000.000 unterschiedliche Merkmale je Bild extrahiert. Es endet bei Merkmalen, die als "high-level features" bezeichnet werden, wie der Anzahl von Kanten und Ecken oder der Anzahl von Flächen etc. Der Vorteil der Verwendung einfacher Merkmale ist deren schnelle Berechenbarkeit; der Nachteil ist allerdings, daß diese Merkmale sehr schlecht geeignet sind, um relevante Suchbildmengen zu beschreiben. Obwohl komplexe Merkmale hier deutlich geeigneter wären, ist ihre Extraktion zur Zeit noch mit einem so hohen Aufwand verbunden, daß eine Anwendung im Bereich von Datenbeständen mit mehr als 10.000 Bildern aus praktischen Gesichtspunkten nahezu unmöglich ist.

Bei einem anderen bekannten Verfahren wird ein Bild von einem Menschen "verschlagwortet", d.h. zu jedem Bild wird eine Liste von textuellen Schlagwörtern erstellt, die sich auf den Bildinhalt beziehen. Die Vorteile dieser aufwendigen Merkmalsextraktion bestehen darin, daß eine Charakterisierung von relevanten Bildern in Form von Verknüpfungen der Schlagworte einfach möglich ist. Aus technischer Sicht wird ein Bild x mittels eines Vektors $\boldsymbol{x} \in \{0, 1\}^s$ dargestellt (s ist die Anzahl aller möglichen Schlagworte); wenn das i-te Schlagwort in der Schlagwortliste des Bildes vorhanden ist, so ist die i-te Komponente $x_i$ des Vektors x gleich 1, andernfalls 0. Verknüpfungen wie Konjunktion (AND) oder Disjunktion (OR) von Worten können in diesem Fall mittels mathematischer Verknüpfungen, wie Multiplikation und Addition dargestellt werden.

Die Bildsuchmaschine berechnet nach dem Start der Suchanfrage für jeden der elektronisch gespeicherten Bilddatensätze $x_1, ..., x_n$ eine Systemrelevanz bezüglich der Suchanfrage. Die Berechnung einer jeweiligen Systemrelevanz ist eine wesentliche Eigenschaft jeder Bildsuchmaschine bzw. jedes Bildsuchverfahrens. Die Effektivität und die Qualität der Berechnung der jeweiligen Systemrelevanz ist für den Erfolg des Suchsystems von wesentlicher Bedeutung. Zwei prinzipiell unterschiedliche Ansätze haben sich in Verbindung mit der Berechnung der Systemrelevanz bei Schlagwort-Suchverfahren durchgesetzt:

- Wenn die vom Benutzer erzeugte textuelle Suchanfrage, welche nur Schlagworte umfaßt, als ein Vektor $\boldsymbol{q} \in \{0, 1\}^s$ interpretiert wird, ist es möglich, mit Hilfe der für die elektronisch gespeicherten Bilder vorhandenen Schlagwortlisten die Ähnlichkeit der textuellen Suchanfrage mit der jeweiligen Schlagwortliste der Bilder bzw. der Bildatensätze in der Datenbank zu berechnen und diese Ähnlichkeit als Systemrelevanzmaß zu benutzen. Dieser Ansatz ist als "vector space model" bekannt und beispielsweise in der Druckschrift G. Salton: "Automatic Information Organization and Retrieval", McGraw-Hill, New York, 1968, beschrieben.

- Bei einem anderen Ansatz ist es mit Hilfe eines Wahrscheinlichkeitsmodells für die Schlagworte in relevanten Dokumenten (geschätzt aus der textuellen Suchanfrage, die nur Schlagworte enthält) möglich, die Wahrscheinlichkeit zu berechnen, daß ein Bild von der Teilmenge $D_{rel}$ umfaßt ist, und diese Wahrscheilichkeit als Systemrelevanzmaß zu benutzen.

Basierend auf den gefundenen Systemrelevanzen für alle Bilder der Bilddatenbank werden die Bilder anschließend in Abhängigkeit von den berechneten Systemrelevanzen geordnet und dem Benutzer angeboten. In der Praxis genügt es oft, nur die 100 Bilder mit den höchsten Werten der Systemrelevanz zu finden - ein Aufgabe, die deutlich schneller zu lösen ist, als eine wesentliche größere Anzahl, beispielsweise 1.000.000 Bilder zu sortieren.

Sollte der Datenbankbenutzer mit dem Suchergebnis noch nicht zufrieden sein, so muß er zurück zur textuellen Anfrage und diese verändern, z.B. weiter einschränken. In einigen Systemen hat der Benutzer die Möglichkeit, eine Rückkopplung ("feedback") in Form der Auswahl eines Bildes zu geben, welches er für "sehr ähnlich" oder "nahe" zu den relevanten Dokumenten $D_{rel}$ hält.

Ein wesentlicher Nachteil, den solche Verfahren aufweisen, ist die Tatsache, daß Suchanfragen auf der Basis identischer textueller Vorgaben des Benutzers in Verbindung mit einem bestimmten Bildbestand stets das gleiche Suchergebnis liefern. Dies bedeutet, daß sich die Benutzer bei der Bildsuche an die Verschlagwortung der Datenbank anpassen müssen, um die individuellen Präferenzen und Eigenarten der Datenbank modellieren zu können, da der einzige Weg, wie Datenbankbenutzer und Suchsystem miteinander "kommunizieren" können, die textuelle Suchanfrage ist. Dieses erfordert von dem Benutzer eine intensive und in der Regel zeitaufwendige "Erkundung" der Spezifik der Verschlagwortung der jeweiligen Datenbank, in welcher der Benutzer die Suche ausführt.

In dem Dokument US 5,793,888 wird ein Verfahren zum Suchen eines Bildes aus einem Satz von Bildern beschrieben, in welchem ein Nutzer in einem oder mehreren Bildern Stellen mit gewünschten oder ungewünschten Eigenschaften, wobei die gewünschten oder ungewünschten Eigenschaften auch in dem zu suchenden Bild enthalten oder nicht enthalten sein sollen. Aus diesen Markierungen werden Histogramme erstellt, welche mit bereits erstellten Histogrammen von den Bildern aus dem Satz von Bildern verglichen werden. Das Bild, bei dem das bereits erstellte Histogramm am besten mit dem durch die Markierungen des Nutzens definierte Histogramm übereinstimmt, wird dann dem Nutzer als Suchergebnis präsentiert.

In dem Artikel "An interactive visual environment to understand, model and exploit user subjectivity in image retrieving system" von Berthouze et al. in Image analysis and processing, 1999, proceedings, International Conference on Venice, Italy, 27-29 September 1999, XP010354328, ISPN: 0-7695-0040-4, Seiten 981-986 werden neuronale Netze vorgestellt.

Aus dem Dokument US 5,999,664 geht ein Dokumentensuchsystem hervor.

In dem Dokument US 5,642,431 wird ein Bilderkennungssystem beschrieben. Bei dem bekannten Bilderkennungssystem werden in einem zu untersuchenden Bild automatisch die Bildebereichen gekennzeichnet, die ein Gesicht bzw. die kein Gesicht zeigen.

Aufgabe der Erfindung ist es, ein verbessertes Verfahren und eine verbesserte Vorrichtung für die Suche nach einer relevanten Teilmenge von Datensätzen aus einer Menge von Datensätzen, insbesondere von Bilddatensätzen zu schaffen, die in einer Datenbank elektronisch gespeichert sind, wobei die Effektivität und die Qualität der Suche sowie die Bedienerfreundlichkeit verbessert werden sollen.

Nach einem Aspekt der Erfindung ist ein Verfahren zur automatischen Suche relevanter Bilddatensätze aus einer Menge von n (n ≥ 2) in einer Speichereinrichtung elektronisch gespeicherten Bilddatensätzen geschaffen, wobei in der Speichereinrichtung für jeden der n Bilddatensätze Bildeigenschaften elektronisch gespeichert sind, und wobei die n Bilddatensätze und die gespeicherten Bildeigenschaften mit Hilfe von Prozessormitteln elektronisch verarbeitbar sind, das Verfahren die folgenden Verfahrensschritte aufweisend:

a) Bereitstellen einer ersten Auswahl von Bilddatensätzen aus den n Bilddatensätzen mittels der Prozessormittel zur Ausgabe mit Hilfe einer Monitoreinrichtung;
b) Ausgeben mehrerer der Bilddatensätze der ersten Auswahl von Bilddatensätzen mit Hilfe der Monitoreinrichtung;
c) elektronisches Erfassen einer jeweiligen Bewertung eines Benutzers für wenigstens einen relevanten Bilddatensatz aus den mehreren gemäß Verfahrensschritt b) ausgegebenen Bilddatensätzen; und
d) Bereitstellen einer zweiten Auswahl von m (m < n) Bilddatensätzen aus den n Bilddatensätzen in einer von einer jeweiligen Systemrelevanz der m Bilddatensätze abhängigen Reihenfolge zur Ausgabe mittels der Monitoreinrichtung;

wobei zum Bereitstellen der zweiten Auswahl der m Bilddatensätze ein maschinelles Lernverfahren zum elektronischen Ermitteln einer Entscheidungsfunktion f ausgeführt wird; wobei die für den wenigstens einen relevanten Bilddatensatz in der Speichereinrichtung elektronisch gespeicherten Bildeigenschaften eine Trainingsmenge für das maschinelle Lernverfahren bilden; wobei für k (k ≥ m) Bilddatensätze mit Hilfe der Entscheidungsfunktion f und der jeweiligen elektronisch gespeicherten Bildeigenschaften die jeweilige Systemrelevanz ermittelt wird; und wobei die k Bilddatensätze zumindest einen Teil der m Bilddatensätze der zweiten Auswahl umfassen.

Nach einem weiteren Aspekt der Erfindung ist eine Bildsuchvorrichtung geschaffen, die Bildsuchvorrichtung aufweisend:

- einer Speichereinrichtung zum elektronischen Speichern von n (n ≥ 2) Bilddatensätzen und jeweiligen Bildeigenschaftsdaten, die den n Bilddatensätzen jeweils zugeordnet sind;
- einer Monitoreinrichtung zum Ausgeben einer ersten Auswahl von Bilddatensätzen aus den n Bilddatensätzen;
- Erfassungsmitteln zum elektronischen Erfassen einer jeweiligen Bewertung eines Benutzers für wenigstens einen relevanten Bilddatensatz aus der ersten ausgegebenen Auswahl von Bilddatensätzen;
- Prozessormitteln zum automatischen Ausführen eines maschinellen Lernverfahrens, um eine Entscheidungsfunktion unter Berücksichtigung der für den wenigstens einen relevanten Bilddatensatz in der Speichereinrichtung elektronisch gespeicherten Bildeigenschaften zu ermitteln, und zum elektronischen Ermitteln einer jeweiligen Systemrelevanz für m (m ≤ n) Bilddatensätze der n in der Speichereinrichtung elektronisch gespeicherten Bilddatensätze mit Hilfe der Entscheidungsfunktion f und der jeweiligen elektronisch gespeicherten Bildeigenschaften; und
- Bereitstellungsmitteln zum Bereitstellen einer zweiten Auswahl von Bilddatensätzen in einer von der jeweiligen Systemrelevanz abhängigen Reihenfolge zur Ausgabe mittels der Monitoreinrichtung, wobei die zweite Auswahl von Bilddatensätzen k (k ≥ m) Bilddatensätze der m Bilddatensätze umfaßt.

Die Erfindung umfaßt den wesentlichen Grundgedanken, eine von dem Benutzer einer Bildsucheinrichtung ausgewählte Teilmenge relevanter Bilder bzw. die zugehörigen Bilddatensätze als eine Trainingsmenge für ein maschinelles Lernverfahren der Bildsucheinrichtung zu nutzen. Im Rahmen des elektronisch ausgeführten maschinellen Lernverfahrens werden die den Bildern aus der Trainingsmenge zugeordneten Bildeigenschaften elektronisch verarbeitet, wobei mathematische Verfahren genutzt werden, um relevante Bilddatensätze in einer Datenbank einer erfaßten Suchanfrage entsprechend aufzusuchen und für eine Weiterverarbeitung, insbesondere die Ausgabe über einen Monitor zur Verfügung zu stellen.

Ein wesentlicher Vorteil der Erfindung besteht darin, daß die unkomfortable Suche mittels Schlagworten durch einfaches Bewerten von Suchergebnissen, beispielsweise per Mausklick ersetzt werden kann. Auf diese Weise wird der Benutzer des Suchsystems von der im Stand der Technik notwendigen Bildbeschreibung (digitale Merkmale und/ oder Schlagworte) befreit.

Ein weiterer Vorteil der Erfindung besteht darin, daß sich das Suchsystem mit Hilfe der Nutzung des maschinellen Lernverfahrens an den Benutzer anpaßt, und nicht umgekehrt, wie es beim Erlernen der spezifischen Verschlagwortung der Datenbank durch den Benutzer der Fall ist. Während bei den bekannten Suchsystemen davon ausgegangen wird, daß das Bildsuchsystem (intern) mit einer Suchanfrage $q$ arbeitet, wird dieses Paradigma durch das maschinelle Lernen einer Entscheidungsfunktion f abgelöst. In der Praxis bedeutet dies, daß kein allgemeingültiges Ähnlichkeitsmaß zwischen Textanfrage $q$ und Bildern $x$ gefunden werden muß.

Das neue Verfahren kann in Verbindung mit bestehenden elektronisch gespeicherten Bildbeschreibungen genutzt werden und erfordert keine aufwendige neue Vorverarbeitung von Bilddatenbanken. Darüberhinaus ist das Verfahren in der Lage, (einfach zu extrahierende) digitale Merkmale zu benutzen, um die Systemrelevanz bestmöglich der Benutzerrelevanz (ausgedrückt durch die dem System unbekannte Menge $D_{rel}$) anzupassen.

Da sich der Benutzer des neuen Suchverfahrens bzw. der neuen Suchvorrichtung bei der wiederholten Ausführung des Verfahrens nach jeder Ausgabe von Suchergebnissen erneut für relevante Bilder entscheiden kann, d.h. eine erneute, von der vorherigen Bewertung unabhängige Bewertung vornehmen kann, wird ein sogenanntes "creative drifting" unterstützt. Dieses bedeutet, daß ein Benuzter, der anfänglich Strandbilder von Hawai suchte, sich bei der erneuten Bewertung anders entscheiden kann. Findet der Benutzer im ausgegebenen Suchergebnis ein Motiv, das seinem Suchwunsch eher entspricht, beispielsweise einen Strand in Australien, so kann er nur noch Bilder von Australiens Stränden als relevant bewerten. Auf diese Weise wird das ursprüngliche Konzept einer Küste Hawai's bei der erneuten Bewertung ignoriert.

Eine zweckmäßige Weiterbildung der Erfindung sieht vor, daß die erste Auswahl von Bilddatensätzen aus den n Bilddatensätzen mittels einer Schlagwortsuche ermittelt wird, wodurch das neue Verfahren auf einfache Weise mit der aus dem Stand der Technik bekannten Schlagwortsuche kombinierbar ist.

Eine hinsichtlich einer verbesserten Benutzerfreundlichkeit bevorzugte Fortbildung der Erfindung sieht vor, daß das elektronische Erfassen der jeweiligen Bewertung des Benutzers für den wenigstens einen relevanten Bilddatensatz gemäß Verfahrensschritt c) die Erfassung einer Betätigung eines elektronischen Auswahlmittels, insbesondere einer Mauseinrichtung umfaßt, welches mit der Monitoreinrichtung zusammenwirkt. Insbesondere bei der Verwendung der Mauseinrichtung ist ein Verfahren geschaffen, welches es dem Benutzer ermöglicht, sich bei der Auswahl der Bilddatensätze auf die dargestellten Datensätze zu konzentrieren und gleichzeitig auf einfache Weise eine Auswahl zu treffen.

Zur Minimierung des elektronischen Rechenaufwands und zur Beschleunigung des Verfahrens kann bei einer bevorzugten Ausgestaltung der Erfindung vorgesehen sein, daß die jeweilige Bewertung des Benutzers für den wenigstens einen relevanten Bilddatensatz gemäß Verfahrensschritt c) als eine binäre Bewertung elektronisch erfaßt wird, so daß jeder bewertete Bilddatensatz als ein relevanter Bilddatensatz und jeder nicht bewertete Bilddatensatz als ein nicht-relevanter Bilddatensatz erfaßbar ist.

Um das Verfahren hinsichtlich der Verfahrensdauer zu minimieren, kann eine zweckmäßige Weiterbildung der Erfindung vorsehen, daß die Entscheidungsfunktion f im Rahmen des maschinellen Lernverfahrens so ermittelt wird, daß das elektronische Ermitteln der jeweiligen Systemrelevanz hinsichtlich der hierfür benötigten Zeitdauer optimiert ist.

Das maschinelle Lernverfahren kann zweckmäßig mit Hilfe eines Perzeptron-Lernverfahrens ausgeführt werden.

Um das maschinelle Lernverfahren auch in Verbindung mit vorhandenen Datenbanken ausführen zu können, sieht eine bevorzugte Ausführungsform der Erfindung vor, daß gespeicherten Bildeigenschaften mit Hilfe der Prozessormittel elektronisch auswertbare Schlagworte umfassen.

Die Erfindung wird im Folgenden anhand von Ausführungsbeispielen unter Berzugnahme auf eine Zeichnung näher erläutert.

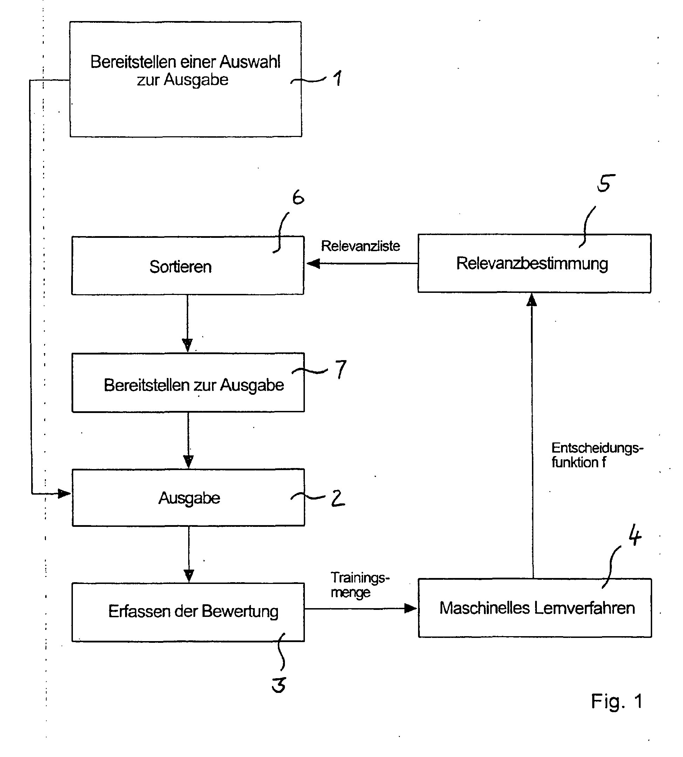

Figur 1 zeigt eine schematische Darstellung eines Blockdiagramms zur Beschreibung eines Verfahrens zur automatischen Suche relevanter Bilddatensätze.

Eine zur Suche zur Verfügung stehende Menge D von Bilder ist in elektronischer Form mit Hilfe von n Bilddatensätzen $x_1$, ..., $x_n$ ($n \geq 2$) in einer Datenbank gespeichert. Im Folgenden wird davon ausgegangen, daß die Bilder verschlagwortet sind, d.h. für jedes der Bilder sind Bildeigenschaften in Form einer Schlagwortliste gebildet, wobei die jeweilige Schlagwortliste in der Datenbank als elektronisch recherchierbarer Schlagwort-Vektor gespeichert ist. Für die Ausführung des erfindungsgemäßen Verfahrens können jedoch beliebige andere Bildeigenschaften genutzt werden, wenn diese in elektronischer Form speicherbar und verarbeitbar sind. Beispielsweise können digitale Merkmale, Grau- oder Farbwerte oder Farbhistogramme genutzt werden. Besonders die Einbeziehung von Farbhistogrammen würde es erlauben, Atmosphäre, Stimmung und Stil des jeweiligen Bildes zu brücksichtigen. Eine Ausnutzung der Struktur und der Form des Bildes ist beispielsweise mit Hilfe von Merkmalen aus einer Wavelet-Analyse möglich. Die Nutzung von Schlagwortlisten hat den Vorteil, daß das Suchsystem wahlweise mit klassischen Schlagwort-Suchtechniken kombiniert werden kann. Auch eine kombinierte Einbeziehung der Schlagworte und eine oder mehrerer digitalet Merkmale kann zweckmäßig vorgesehen sein, um die Qualität der Suchergebnisse zu verbessern.

In diesem Zusammenhang ist anzumerken, daß die Bildbeschreibung ein entscheidender Faktor für die Qualität jedes Bildsuchsystems darstellt. Wenn die elektronisch gespeicherten Bildeigenschaften (Schlagwortlisten) der Bilder bzw. Bilddatensätze nichts mit den Bildinhalten zu tun haben, so kann man von keinem Bildsuchsystem sinnvolle Ergebnisse erwarten.

Gemäß Figur 1 wird zunächst eine erste Auswahl von Bildern, d.h. der zughörigen Bilddatensätze zur Ausgabe über eine Monitoreinrichtung (nicht dargestellt) bereitgestellt 1, die mit einem Computer verbunden ist. Der Computer ist seinerseits mit der Datenbank verbunden, in welcher die Menge D von Bilddatensätzen elektronisch gespeichert ist. Die erste Auswahl kann mit Hilfe einer Schlagwortsuche erzeugt werden. Es können auch andere Suchverfahren genutzt werden. Wenn die Schlagwortsuche genutzt wird, ist sichergestellt, daß das im Folgenden beschriebene Verfahren funktionale Erfordernisse von bekannten Schlagwort-Suchsystemen erfüllt, d.h. mit diesen zusammenwirken kann bzw. in Verbindung mit diesen genutzt werden kann.

Anschließend werden zumindest einige der Bilder der ersten Auswahl mit Hilfe der Monitoreinrichtung ausgegeben 2 (vgl. Figur 1). Der Benutzer kann dann mit Hilfe von Auswahlmitteln des Computers zu mindestens einigen Suchergebnissen (ausgegebenen Bildern bzw. Bilddatensätzen) eine jeweilige (binäre) Wertung $b_i \in \{-1, +1\}$ abgeben, wobei -1 bedeutet, daß das entsprechende Bild nichts mit der gesuchten, relevanten Teilmenge von Bildern Drei zu tun hat, während +1 eine gewisse "Nähe" bzw. Übereinstimmung des jeweiligen Bildes zu den relevanten Bildern $D_{rel}$ ausdrückt. Hierbei ist es nicht notwendig, daß alle präsentierten bzw. ausgegebenen Bilder bewertet werden. Die Bewertung führt der Benutzer beispielsweise mittels eines einfachen Mausklicks aus, welcher mit Hilfe des Computers elektronisch erfaßt wird 3 (vgl. Figur 1) und dem jeweiligen Bild elektronisch zugeordnet wird. Für die Bewertung können beliebige Auswahlmittel des Computers genutzt werden, die die Erfassung der Bewertung derart ermöglichen, daß die erfaßte Bewertung anschließend dem jeweiligen Bild zugeordnet werden kann. Zu den nutzbaren Auswahlmitteln gehört zum Beispiel eine Tastatur des Computers.

In diesem Zusammenhang wird ein wesentlicher Vorteil Verfahrens deutlich. Das Bewerten der ausgegebenen Bilder ist in sehr kurzer Zeit, beispielsweise in weniger als einer Sekunde möglich. Im Gegensatz dazu erfordert die Bewertung eines Textes, wie es bei bekannten Schlagwort-Suchmaschinen notwendig ist, üblicherweise mehrere Minuten. Es ist realistisch anzunehmen, daß der Benutzer in der Regel nicht mehr als 100 Bilder bewerten wird.

Die bewerteten Bilder bzw. Bilddatensätze - welche meist nur einen sehr kleinen Teil der gesamten, für die Suche zur Verfügung stehenden Menge D ausmachen - bilden eine Trainingsmenge für ein anschließendes maschinelles Lernverfahren 4 (vgl. Figur 1), welches mit Hilfe des Computers automatisch ausgeführt wird. Im Rahmen des maschinellen Lernverfahrens wird versucht, eine reellwertige Entscheidungsfunktion f: D → R zu lernen, die möglichst genau die Bewertung der vom Benutzer direkt zur Verfügung gestellten bzw. bewerteten Bilder (Trainingsmenge) nachbildet. Hierbei ist die Anwendung von Verfahren wie des als solchen bekannten Perzeptronlernens (M. Rosenblatt: Principles of neurodynamics: Perceptron and Theory of Braim Mechanism, Spartan-Books, Washington D.C., 1962) oder der sogenannten "Support Vector Machine" (C. Cortes und V. Vapnik: Support Vector Networks in Machine Learning, 20: 273-297, 1995) möglich. Bei der automatischen elektronischen Ausführung des maschinellen Lernverfahrens wird zweckmäßig die Tatsache ausgenutzt, daß es im Gegensatz zu klassischen Fragestellungen maschineller Lernverfahren nicht von wesentlicher Bedeutung ist, daß ein Vorhersagefehler (der Relevanz) auf nicht zum maschinellen Lernen genutzte Bilder der Menge D sehr klein ist, da es bei der praktischen Umsetzung des Verfahrens genügt, wenn mindestens ein Bild der Teilmenge der relevanten Bilder $D_{rel}$ gefunden wurde.

Die im Rahmen des maschinellen Lernverfahrens ermittelte Entscheidungsfunktion f wird anschließend benutzt, um den Bilder der Menge D eine neue Relevanz zuzuweisen 5 (vgl. Figur 1), welche zu der vom Benutzer individuell vergebenen Bewertung passend ist. Danach werden die Bilder der neuen Relevanz entsprechend sortiert 6 und zur Ausgabe mittels der Monitoreinrichtung bereitgestellt bzw. angeboten 7 (vgl. Figur 1). Bei der Berechnung der neuen Relevanz, kann es vorteilhaft sein, nur für eine Teilmenge (> 10.000) der Gesamtmenge D von Bildern die neue Relevanz zu berechnen, wenn die der Bildbestand in der Menge D sehr groß ist (beispielsweise > 10.000.000). Hierdurch wird der Rechenaufwand vermindert, was insbesondere zur Verkürzung des hiermit verbundenen Zeitaufwands führt. Zweckmäßig wird die neue Relevanz mit Hilfe der Entscheidungsfunktion hierbei zumindest für die Bilder berechnet, die von der ersten Auswahl 1 (vgl. Figur 1) umfaßt sind.

Der beschriebene und in Figur 1 schematisch dargestellte Ablauf kann wiederholt ausgeführt werden, bis der Benutzer ein oder mehrere relevante(s) Bild(er) gefunden hat oder eine vollständig neue Suchanfrage starten möchte, d.h. die Menge $D_{rel}$ sich ändert.

Eine Kernkomponente des beschriebenen Verfahrens ist die Verwendung des maschinellen Lernverfahrens, da auf diese Weise in einem sogenannten "Information Retrieval System" erstmalig Methoden des Klassifikationslernens mit der Suche von Bildern in elektronischen Datenbanken verbunden werden. Ein maschinelles Lernverfahren ist eine Prozedur, welche aus einer gegebenen Menge von Entscheidungsfunktionen auf der Grundlage der Trainingsmenge eine Entscheidungsfunktion f auswählt (erlernt). Ziel der Auswahl ist es, diejenige Entscheidungsfunktion f* zu finden, welche auf noch nicht gesehenen Bildern der Menge D von Bildern bzw. Bilddatensätzen die wenigsten Fehlentscheidungen (bezüglich der Relevanz) trifft. Die noch nicht gesehenen Bilder umfassen hierbei die Bilder der Menge D, welche dem Benutzer für eine Bewertung noch nicht über die Monitoreinrichtung ausgegeben wurden. Der Unterschied zwischen dem Fehler, welchen die gelernte Funktion f und die beste Funktion f* auf die noch nicht gesehenen Bilder erzeugen, wird Generalisierungsfehler genannt. Grundsätzlich lassen sich Lernverfahren nach zwei Kriterien bewerten:

i) Wie klein ist der Generalisierungsfehler im Durchschnitt, d.h. gemittelt über häufiges Lernen?
ii) Wie aufwendig ist das Lernverfahren in Abhänigkeit von der Anzahl der von der Trainingsmenge umfaßten Trainingsbeispiele ?

Obwohl es bei vielen Anwendungen darauf ankommt, daß sowohl der Generalisierungsfehler als auch der Rechenaufwand klein sind - ein oft nicht zu realisierendes Ziel - ist es im Falle des hier beschriebenen Suchverfahrens eher von sekundärer Bedeutung, wie aufwendig der Lernalgorithmus ist, da in der Regel maximal 100 vom Benutzer bewertete Bilder im Rahmen der Trainingsmenge zur Verfügung gestellt werden. Es genügt dem Benutzer des Bildsuchsystems oft, wenn er bereits eines der relevanten Bilder innerhalb der ersten 30 Bilder präsentiert bekommt.

Grundsätzlich ist in Verbindung mit dem beschriebenen neuen Suchverfahren jedes maschinelle Lernverfahren einsetzbar, welches Vektoren **x** (die Bildbeschreibungen, beispielsweise Schlagwortvektoren) als Eingabe hat und reele Zahlen (die berechneten Systemrelevanzen) als Ausgabe liefert. Allerdings ist es vorteilhaft, wenn das Lernverfahren explizit versucht, Entscheidungsfunktionen zu finden, bei denen die Berechnung der Relevanz auf noch nicht gesehenen Bildern sehr schnell geschieht. Gegenwärtig werden verallgemeinerte lineare Funktionen bevorzugt:

$$f(x) = \sum_{i=1}^{N} w_i \phi_i(x) \qquad\qquad (1)$$

wobei die Funktionen $\phi_i : D \to R$ als Basisfunktionen bezeichnet werden, $w_1, \dots w_N$ sind die vom Lernverfahren zu bestimmenden Größen. Es kann gezeigt werden, daß es für eine sehr große Klasse von Lernverfahren möglich ist, den folgenden Ansatz zu machen:

$$w_i = \sum_{j=1}^{t} \alpha_j \phi_i(x_j) \qquad (2)$$

wobei $x_1, ..., x_t$ ($t \leq n$) die vom Benuzter bewerteten Bilder (Bildbeschreibungen) sein sollen. Der Vorteil eines solchen Ansatzes wird ersichtlich, wenn man Gleichung (2) in Gleichung (1) einsetzt:

$$f(x) = \sum_{i=1}^{N} \left( \sum_{j=1}^{t} \alpha_j \phi_i(x_j) \right) \phi_i(x) \qquad (3)$$

$$= \sum_{j=1}^{t} \alpha_j \underbrace{\left( \sum_{i=1}^{N} \phi_i(x_j) \phi_i(x) \right)}_{K(x_j, x)} \qquad (4)$$

Anstelle N Parameter $w_1, ..., w_N$ lernen zu müssen, was oft zu Problemen, wie der Überanpassüng an die Trainingsmenge (sogenanntes "overfitting") führen kann, sind nur noch t<100 Parameter $\alpha_1, ..., \alpha_t$ zu lernen. Insbesondere im Bereich der Bildsuche ist die Anzahl N der Schlagworte weit größer als die Anzahl bewerteter Bilder t. Weiterhin ergibt sich, daß es ausreicht, die Funktion K, die als Kern bezeichnet wird (vgl. G. Wahba: Spline Models for Observational Data, Society for Industrial ans Applied Mathematics, Philadelphia, 1990), zu spezifizieren. Bei der praktischen Anwendung wird gegenwärtig der folgende Kern bevorzugt:

$$K(x, x') = \left( \sum_{i=1}^{S} x_i \cdot x'_i + c \right)^p, c \in \mathfrak{R}^+, p \in \{1, 2, ...\} \qquad (5)$$

Dieser Kern hat den folgenden Vorteil: Wenn p=2 gilt, dann bedeutet dies, daß Basisfunktionen $\phi$ benutzt werden, die von der Gestalt $x_i - x_j$ sind, d.h. bei Bildbeschreibungsvektoren $x \in \{0, 1\}^s$ einer logischen Verknüpfung mittels Konjunktion (AND) des i-ten und j-ten Schlagwortes entsprechen. Für größere p entspricht dies beispielsweise Merkmalen, wie "i-tes, j-tes und k-tes Schlagwort sind gleichzeitig aufgetreten". Verallgemeinert ausgedrückt bedeutet dies, daß Korrelationen zwischen Schlagworten bis zur p-ten Ordnung erfaßt werden. Die Zahl c steuert die a-priori Gewichtung von Schlagwortkombinationen.

Basierend auf der hier offenbarten Beschreibung von Entscheidungsfunktionen sind beispielsweise Anwendungen von Lernverfahren wie (a) "Support Vector Machine" (vgl. beispielsweise C. Cortes und V. Vapnik: Support Vector Networks in Machine Learning, 20:273-297, 1995), (b) "Bayes Point Machine" (vgl. beispielsweise R. Herbrich et al.: Bayes point machines: Bayes point in kernel space, Proceedings of IJCAI Workshop Support Vector Machines, 1999), (c) "Linear Programming Machine" (vgl. beispielsweise T. Graepel et al.: Classification on proximity data with LP-machines, Proceedings of the Ninth International Conference on Artificial Neuronal Networks, 1999) oder (d) das bekannte Perzeptron (vgl. beispielsweise M. Rosenblatt: Principles of neurodynamics: Perceptron and Theory of Braim Mechanism, Spartan-Books, Washington D.C., 1962) nutzbar. Gegenwärtig wird das Perzeptronlernverfahren bevorzugt, da gezeigt werden kann, daß dieses Lernverfahren mit dem geringsten Rechenaufwand garantiert zu Lösungen $\alpha = (\alpha_1, ..., \alpha_t)$

führt, bei denen nur wenige Koeffizienten $\alpha_i$ von Null verschieden sind - eine Tatsache, welche die Berechnung neuer Systemrelevanzen durch die gelernte Entscheidungsfunktion f sehr beschleunigt. Des weiteren wurde der orginale Algorithmus um eine automatische Adaption des sogenannten Ridgeterms erweitert, d.h. wenn das Lernverfahren nach einigen, beispielsweise nach zehn Iterationen durch die gesamte Trainingsmenge noch nicht beendet ist, wird die Kernfunktion verändert zu

$$K(x, x') = \begin{cases} K(x, x') & \text{wenn } x \neq x' \\ \\ K(x, x') + \lambda & \text{wenn } x = x' \end{cases}$$

Der Parameter $\lambda$ wird nun nach und nach erhöht und es kann gezeigt werden, daß dies zur Termination des Algorithmus bzw. Verfahrens führen muß.

Das beschriebene Verfahren zum automatischen Suchen relevanter Bilddatensätze kann mit Hilfe eines Computerprogramms auf einem digitalen Computer, beispielsweise einem Personal-Computer, einem Netzwerk-Computer oder einer Servereinrichtung installiert und ausgeführt werden. Die vorliegende Anmeldung bezieht sich auch auf ein Computerprogramm-Produkt, welches in eine Speichereinrichtung eines digitalen Computers geladen werden kann, wobei das Computerprogramm-Produkt Softwarecode-Abschnitte zum Ausführen der insbesondere in einem der Ansprüche 1 bis 7 offenbarten Verfahrensschritte umfaßt, wenn das Computerprogramm-Produkt auf dem digitalen Computer genutzt wird.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

**Patentansprüche**

1.   Verfahren zur automatischen Suche relevanter Bilddatensätze aus einer Menge von n (n $\geq$ 2) in einer Speichereinrichtung elektronisch gespeicherten Bilddatensätzen, wobei in der Speichereinrichtung für jeden der n Bilddatensätze Bildeigenschaften elektronisch gespeichert sind, und wobei die n Bilddatensätze und die gespeicherten Bildeigenschaften mit Hilfe von Prozessormitteln elektronisch verarbeitbar sind, das Verfahren die folgenden Verfahrensschritte aufweisend:

a) Bereitstellen einer ersten Auswahl von Bilddatensätzen aus den n Bilddatensätzen mittels der Prozessormittel zur Ausgabe mit Hilfe einer Monitoreinrichtung;
b) Ausgeben mehrerer der Bilddatensätze der ersten Auswahl von Bilddatensätzen mit Hilfe der Monitoreinrichtung,
c) elektronisches Erfassen einer jeweiligen Bewertung eines Benutzers für wenigstens einen relevanten Bilddatensatz aus den mehreren gemäß Verfahrensschritt b) ausgegebenen Bilddatensätzen; und
d) Bereitstellen einer zweiten Auswahl von m (m $\leq$ n) Bilddatensätzen aus den n Bilddatensätzen in einer von einer jeweiligen Systemrelevanz der m Bilddatensätze abhängigen Reihenfolge zur Ausgabe mittels der Monitoreinrichtung;

wobei zum Bereitstellen der zweiten Auswahl der m Bilddatensätze ein maschinelles Lernverfahren zum elektronischen Ermitteln einer Entscheidungsfunktion f ausgeführt wird; wobei die für den wenigstens einen relevanten Bilddatensatz in der Speichereinrichtung elektronisch gespeicherten Bildeigenschaften eine Trainingsmenge für das maschinelle Lernverfahren bilden; wobei für k (k $\geq$ m) Bilddatensätze mit Hilfe der Entscheidungsfunktion f und der jeweiligen elektronisch gespeicherten Bildeigenschaften die jeweilige Systemrelevanz ermittelt wird; und wobei die k Bilddatensätze zumindest einen Teil der m Bilddatensätze der zweiten Auswahl umfassen, **dadurch gekennzeichnet, dass** das maschinelle Lernverfahren als ein Perzeptron-Lernverfahren ausgeführt wird, bei dem als Entscheidungsfunktion f eine lineare Entscheidungsfunktion wie folgt verwendet wird:

$$f(x) = \sum_{i=1}^{N} w_i \phi_i(x),$$

wobei die Funktionen $\phi_i$: $D \rightarrow R$ die Basisfunktionen und $w_1$ bis $w_N$ die vom Lemverfahren zu bestimmenden Größen sind.

2. Verfahren nach Anspruch 1, **dadurch gekennzeichnet, dass** die erste Auswahl von Bilddatensätzen aus den n Bilddatensätzen mittels einer Schlagwortsuche ermittelt wird.

3. Verfahren nach Anspruch 1 oder 2, **dadurch gekennzeichnet, dass** das elektronische Erfassen der jeweiligen Bewertung des Benutzers für den wenigstens einen relevanten Bilddatensatz gemäß Verfahrensschritt c) die Erfassung einer Betätigung eines elektronischen Auswahlmittels, insbesondere einer Mauseinrichtung umfasst, welches mit der Monitoreinrichtung zusammenwirkt.

4. Verfahren nach einem der vorangehenden Ansprüche, **dadurch gekennzeichnet, dass** die jeweilige Bewertung des Benutzers für den wenigstens einen relevanten Bilddatensatz gemäß Verfahrensschritt c) als eine binäre Bewertung elektronisch crfasst wird, so dass jeder bewertete Bilddatensatz als ein relevanter Bilddatensatz und jeder nicht bewertet Bilddatensatz als ein nicht-relevanter Bilddatensatz erfassbar ist.

5. Verfahren nach einem der vorangehenden Ansprüche, dadurch **gekennzeichet,** dass die Entscheidungsfunktion f im Rahmen des maschinellen Lernverfahrens so ermittelt wird, dass das elektronische Ermitteln der jeweiligen Systemrelevanz hinsichtlich der hierfür benötigten Zeitdauer optimiert ist.

6. Verfahren nach einem der vorangehenden Ansprüche, **dadurch gekennzeichnet, dass** die gespeicherten Bildeigenschaften mit Hilfe der Prozessormittel elektronisch auswertbare Schlagworte umfassen.

7. Bildsuchvorrichtung mit:

- einer Speichereinrichtung zum elektronischen Speichern von n (n $\geq$ 2) Bilddatensätzen und jeweiligen Bildeigenschaftsdaten, die den n Bilddatensätzen jeweils zugeordnet sind,
- einer Monitoreinrichtung zum Ausgeben einer ersten Auswahl von Bilddatensätzen aus den n Bilddatensätzen;
- Erfassungsmitteln zum elektronischen Erfassen einer jeweiligen Bewertung eines Benutzers für wenigstens einen relevanten Bilddatensatz aus der ersten ausgegebenen Auswahl von Bilddatensätzen;
- Prozessormitteln zum automatischen Ausführen eines maschinellen Lernverfahrens, um eine Entscheidungsfunktion unter Berücksichtigung der für den wenigstens einen relevanten Bilddatensatz in der Speichereinrichtung elektronisch gespeicherten Bildeigenschaften zu ermitteln, und zum elektronischen Ermitteln einer jeweiligen Systemrelevanz für m (m $\leq$ n) Bilddatensätze der n in der Speichereinrichtung elektronisch gespeicherten Bilddatensätze mit Hilfe der Entscheidungsfunktion f und der jeweiligen elektronisch gespeicherten Bildeigenschaften; und
- Bereitstellungsmitteln zum Bereitstellen einer zweiten Auswahl von Bilddatensätzen in einer von der jeweiligen Systemrelevanz abhängigen Reihenfolge zur Ausgabe mittels der Monitoreinrichtung, wobei die zweite Auswahl von Bilddatensätzen k (k $\geq$ m) Bilddatensätze der m Bilddatensätzen umfasst,

**dadurch gekennzeichnet, dass** das maschinelle Lernverfahren ein Perzeptron-Lernverfahren ist, bei dem als Entscheidungsfunktion f eine lineare Entscheidungsfunktion wie folgt verwendet wird:

$$f(x) = \sum_{i=1}^{N} w_i \phi_i(x),$$

wobei die Funktionen $\phi_i$ : $D \rightarrow R$ die Basisfunktionen und $w_1$ bis $w_N$ die vom Lernverfahren zu bestimmenden Größen sind.

8. Bildsuchvorrichtung nach Anspruch 7, **gekennzeichnet durch** Suchmittel zum Ausführen einer Schlagwortsuche zum Suchen der ersten Auswahl von Bilddatensätzen.

9. Computerprogrammprodukt, welches in einen internen Speicher einer Computereinrichtung ladbar ist und welches Computerprogrammabschnitte zum Ausführen der Verfahrensschritte nach einem der Ansprüche 1 bis 6 beim Abarbeiten des Computerprogrammprodukts in der Computereinrichtung umfasst.

10. Computerprogrammprodukt nach Anspruch 9, wobei wenigstens die Computerprogrammabschnitte auf einem von der Computereinrichtung lesbaren Speichermedium gespeichert sind.

**Claims**

1. A method of automatically searching for relevant picture data sets in a quantity of n (n ≥ 2) picture data sets electronically stored in a memory means, wherein picture attributes for each of the n picture data sets are stored electronically in the memory means, and wherein the n picture data sets as well as the stored picture attributes are adapted to be processed electronically by processor means, the method comprising the following steps:

   (a) providing a first selection of picture data sets from the n picture data sets with the aid of the processor means to be output with the aid of a monitor means;
   (b) outputting several of the picture data sets of the first selection of picture data sets with the aid of the monitor means;
   (c) electronically recording a respective evaluation by a user for at least one relevant picture data set of the plurality of picture data sets output according to method step (b); and
   (d) providing a second selection of m (m ≤ n) picture data sets from the n picture data sets in a sequence which depends on a respective system relevance of the m picture data sets to be output by the monitor means;

   wherein a machine learning process is carried out for electronically determining a decision function f to provide the second selection of the m picture data sets; wherein the picture attributes electronically stored in the memory means for the at least one relevant picture data set constitute a training quantity for the machine learning process; wherein the respective system relevance is determined for k (k ≥ m) picture data sets with the aid of the decision function f and the respective electronically stored picture attributes; and wherein the k picture data sets comprise at least part of the m picture data sets of the second selection, **characterized in that** the machine learning process is carried out as a perceptron learning process using as decision function a linear function as follows:

$$f(x) = \sum_{i=1}^{N} w_i \phi_i(\boldsymbol{x}),$$

   wherein $\phi_i : D \rightarrow R$ are the basis functions and $w_1$ to $w_N$ are the values to be determined by the learning process.

2. The method as claimed in claim 1, **characterized in that** the first selection of picture data sets from the n picture data sets is determined by means of a catchword search.

3. The method as claimed in claim 1 or 2, **characterized in that** the electronic recording of the respective evaluation by the user for the at least one relevant picture data set according to method step (c) comprises recording an actuation of an electronic selector means, especially a mouse means which cooperates with the monitor means.

4. The method as claimed in one of the preceding claims, **characterized in that** the respective evaluation of the user for the at least one relevant picture data set according to method step (c) is recorded electronically as a binary evaluation so that each picture data set evaluated is adapted to be recorded as a relevant picture data set and each picture data set not evaluated is adapted to be recorded as a non-relevant picture data set.

5. The method as claimed in one of the preceding claims, **characterized in that** the decision function f is determined in the context of the machine learning process so that the electronic determination of the respective system relevance is optimized as regards the time period it requires.

6. The method as claimed in one of the preceding claims, **characterized in that** the picture attributes stored comprise catchwords suitable for electronic evaluation by the processor means.

7. A picture search apparatus, comprising:

- a memory means for electronically storing n (n ≥ 2) picture data sets and respective picture attributes each associated respectively with the n picture data sets;
- a monitor means for outputting a first selection of picture data sets from the n picture data sets;
- recording means for electronically recording a respective evaluation by a user for at least one relevant picture data set of the first selection of picture data sets output;
- processor means for automatically carrying out a machine learning process to determine a decision function f in consideration of the picture attributes stored electronically in the memory means for the at least one relevant picture data set and for electronically determining a respective system relevance for m (m ≤ n) picture data sets of the n picture data sets stored electronically in the memory means with the aid of the decision function f and the respective electronically stored picture attributes; and
- means for providing a second selection of picture data sets in a sequence which depends on the respective system relevance to be output by the monitor means, the second selection of picture data sets comprising k (k ≥ m) picture data sets of the m picture data sets,

**characterized in that** the machine learning process is a perceptron learning process using as decision function a linear function as follows:

$$f(x) = \sum_{i=1}^{N} w_i \phi_i(x),$$

wherein $\phi_i : D \rightarrow R$ are the basis functions and $w_1$ to $w_N$ are the values to be determined by the learning process.

8. The picture search apparatus as claimed in claim 7, **characterized by** search means for carrying out a catchword search to search for the first selection of picture data sets.

9. A computer program product loadable into the internal memory of a digital computer, comprising software code portions for performing the steps of one of the claims 1 to 6 when said product is run on a computer.

10. Computer program product as claimed in claim 9 embodied on a computer readable medium.

**Revendications**

1. Procédé pour la recherche automatique de séries de données d'image pertinentes parmi une quantité n (n ≥ 2) de séries de données d'image stockées électroniquement dans un dispositif de mémoire, moyennant quoi on stocke électroniquement des propriétés d'image pour chacune des n séries de données d'image dans le dispositif de mémoire, et moyennant quoi les n séries de données d'image et les propriétés d'image stockées peuvent être traitées électroniquement à l'aide de moyens de processeur, le procédé présentant les étapes suivantes du procédé :

a) mise à disposition d'une première sélection de séries de données d'image parmi les n séries de données d'image à l'aide des moyens de processeur pour la sortie à l'aide d'un dispositif de moniteur,
b) sortie de plusieurs des séries de données d'image de la première sélection de séries de données d'image à l'aide du dispositif de moniteur,
c) saisie électronique d'une évaluation respective d'un utilisateur pour au moins une série de données d'image pertinente parmi les plusieurs séries de données d'image sorties conformément à l'étape b) du procédé, et
d) mise à disposition d'une deuxième sélection de m (m ≤ n) séries de données d'image d'entre les n séries de données d'image selon un ordre dépendant d'une pertinence de système respective des m séries de données d'image pour la sortie à l'aide du dispositif de moniteur,

moyennant quoi, pour la mise à disposition de la deuxième sélection des m séries de données d'image, on exécute un procédé d'apprentissage automatique pour la détermination électronique d'une fonction de décision f ; moyennant quoi les propriétés d'image stockées électroniquement dans le dispositif de mémoire pour cette au moins une série de données d'image pertinente forment une quantité d'entraînement pour le procédé d'apprentissage automatique ; moyennant quoi l'on détermine, pour k (k ≥ m) séries de données d'image, à l'aide de la fonction de décision f et des propriétés d'image stockées électroniquement respectives, la pertinence de système respective ; et moyennant quoi les k séries de données d'image comprennent au moins une partie des m séries de données d'image de la deuxième sélection, **caractérisé en ce que** le procédé d'apprentissage automatique est réalisé en tant que procédé d'apprentissage de perceptron, avec lequel on utilise en guise de fonction de décision f une fonction de décision linéaire telle que ce qui suit :

$$f(x) = \sum_{i=1}^{N} w_i \phi_i(x),$$

où les fonctions $\square_i \to D \; \mathbb{R}$ sont les fonctions de base et $w_1$ à $w_n$ les grandeurs à déterminer par le procédé d'apprentissage.

2. Procédé selon la revendication 1, **caractérisé en ce que** la première sélection de séries de données d'image est déterminée à partir de n séries de données d'image à l'aide d'une recherche de mots-clés.

3. Procédé selon les revendications 1 ou 2, **caractérisé en ce que** la saisie électronique de l'évaluation respective de l'utilisateur comprend, pour cet au moins une série de données d'image pertinente conformément à l'étape c) du procédé, la saisie d'un actionnement d'un moyen de sélection électronique, en particulier d'un moyen de souris, lequel coopère avec le dispositif de moniteur.

4. Procédé selon l'une des revendications précédentes, **caractérisé en ce que** l'évaluation respective de l'utilisateur pour cette au moins une série de données d'image pertinente conformément à l'étape c) du procédé est saisie électroniquement en tant qu'évaluation binaire, de sorte que chaque série de données d'image évaluée peut être saisie en tant que série de données d'image pertinente et chaque série de données d'image non évaluée en tant qu'une série de données d'image non pertinente.

5. Procédé selon l'une des revendications précédentes, **caractérisé en ce que** la fonction de décision f est déterminée dans le cadre du procédé d'apprentissage automatique d'une manière telle, que la détermination électronique de la pertinence de système respective est optimisée compte tenu de la durée nécessaire à cet effet.

6. Procédé selon l'une des revendications précédentes, **caractérisé en ce que** les propriétés d'image stockées comprennent des mots-clés pouvant être analysés électroniquement à l'aide des moyens de processeur.

7. Dispositif de recherche d'images avec :

    - un dispositif de mémoire pour le stockage électronique de n (n ≥ 2) séries de données d'image et de données de propriétés d'image respectives, lesquelles sont respectivement associées aux n séries de données d'image,
    - un dispositif de moniteur pour la sortie d'une première sélection de séries de données d'image parmi les n séries de données d'image ;
    - des moyens de saisie pour la saisie électronique d'une évaluation respective d'un utilisateur pour au moins une série de données d'image pertinente parmi la première sélection de séries de données d'image sortie,
    - des moyens de processeur pour l'exécution automatisée d'un procédé d'apprentissage automatique afin de déterminer une fonction de décision en tenant compte des propriétés d'image stockées électroniquement dans le dispositif de mémoire pour cette au moins une série de données d'image pertinente, et pour la détermination électronique d'une pertinence de système respective pour m (m ≤ n) séries de données d'image des n séries de données d'image stockées électroniquement dans le dispositif de mémoire à l'aide de la fonction de décision f et des propriétés d'image stockées électroniquement respectives, et
    - des moyens de mise à disposition, pour la mise à disposition d'une deuxième sélection de séries de données d'image selon un ordre dépendant de la pertinence de système respective pour la sortie à l'aide du dispositif de moniteur, la deuxième sélection de séries de données d'image comprenant k (k ≥ m) séries de données d'image des m séries de données d'image,

**caractérisé en ce que** le procédé d'apprentissage automatique est un procédé d'apprentissage de perceptron dans lequel on utilise, en guise de fonction de décision f, une fonction de décision linéaire telle que ce que ce qui suit :

$$f(x) = \sum_{i=1}^{N} w_i \phi_i(x),$$

où les fonctions $\phi_i$: D $\rightarrow$ $\Re$ sont les fonctions de base et $w_1$ à $w_n$ les grandeurs à déterminer par le procédé d'apprentissage.

8. Dispositif de recherche d'images selon la revendication 7, **caractérisé par** des moyens de recherche pour exécuter une recherche de mots-clés afin de rechercher la première sélection de séries de données d'image.

9. Produit de programme informatique qui peut être chargé dans une mémoire interne d'un dispositif informatique et qui comprend des parties de programme informatique pour exécuter les étapes du procédé selon l'une des revendications 1 à 6 lorsque le produit de programme informatique est exploité dans le dispositif informatique.

10. Produit de programme informatique selon la revendication 9, dans lequel au moins les parties de programme informatique sont stockées sur un support de stockage pouvant être lu par le dispositif informatique.

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5793888 A
- US 5999664 A
- US 5642431 A

### In der Beschreibung aufgeführte Nicht-Patentliteratur

- **DRUCKSCHRIFT G. SALTON.** Automatic Information Organization and Retrieval. McGraw-Hill, 1968
- **BERTHOUZE et al.** *Image analysis and processing, 1999, proceedings, International Conference on,* 27. September 1999, 981-986
- **M. ROSENBLATT.** Principles of neurodynamics: Perceptron and Theory of Braim Mechanism. Spartan-Books
- **C. CORTES ; V. VAPNIK.** Support Vector Networks. *Machine Learning,* 1995, vol. 20, 273-297
- **R. HERBRICH et al.** Bayes point machines: Bayes point in kernel space. *Proceedings of IJCAI Workshop Support Vector Machines,* 1999
- **T. GRAEPEL et al.** Classification on proximity data with LP-machines. *Proceedings of the Ninth International Conference on Artificial Neuronal Networks,* 1999